# EUROPÄISCHE PATENTSCHRIFT

(11) **EP 3 292 175 B1**
(45) Veröffentlichungstag und Bekanntmachung des Hinweises auf die Patenterteilung: **26.05.2021**
(21) Anmeldenummer: 16724272.6
(22) Anmeldetag: 20.04.2016
(51) Int. Cl.: C09D 4/06, C08F 222/14, C09D 135/02

(54) **BESCHICHTUNGSSYSTEME, DEREN VERWENDUNG ZUR BESCHICHTUNG VON BAUTEILEN SOWIE DAMIT BESCHICHTETE BAUTEILE FÜR WINDKRAFTANLAGEN**
COATING SYSTEMS, USE THEREOF FOR COATING COMPONENTS AND THUS COATED COMPONENTS FOR WIND POWER PLANTS
SYSTÈME DE REVÊTEMENT, SON UTILISATION POUR REVÊTIR DES PIÈCES ET PIÈCES AINSI REVÊTUES POUR DES ÉOLIENNES

(30) Priorität: 20.04.2015 DE 102015105979
(43) Veröffentlichungstag der Anmeldung: 14.03.2018
(73) Patentinhaber: Mankiewicz Gebr. & Co. GmbH & Co. KG, 21107 Hamburg (DE)
(72) Erfinder: WEHNER, Jochen, 21075 Hamburg (DE); COSTA, Andrea, 21149 Hamburg (DE)
(86) Internationale Anmeldenummer: PCT/DE2016/000169
(87) Internationale Veröffentlichungsnummer: WO 2016/169545

(56) Entgegenhaltungen:
- EP-A1- 0 326 723
- EP-A1- 1 245 590
- EP-A1- 2 374 836
- WO-A1-2013/050574
- WO-A1-2013/050623

## Beschreibung

Die vorliegende Erfindung betrifft verbesserte Beschichtungsstoffe auf der Basis von RMA-Systemen, welche mit Hilfe einer klassischen Michael-Addition vernetzen. Die Erfindung betrifft auch die daraus herstellbaren Beschichtungen sowie beschichtete Bauteile, insbesondere Bauteile für Windkraftanlagen wie beispielsweise Maschinengehäuse oder Rotorblätter.

Beschichtungsstoffe, die in einer Michael-Additionsreaktion vernetzen, sind bekannt. Die daraus hergestellten Beschichtungen weisen hohe Bewitterungsstabilitäten und chemische Beständigkeiten auf. Die schnelle Aushärtung dieser Beschichtungsstoffe wird durch den Einsatz hoher Katalysatorgehalte erreicht, wobei jedoch die Verarbeitungszeit oder Topfzeit des Beschichtungsstoffs stark verkürzt wird.

Eine schnelle Aushärtung ist vor allem bei der Beschichtung oder Lackierung von großen Bauteilen wie zum Beispiel bei Rotorblättern für Windkraftanlagen besonders vorteilhaft. Doch allein durch die Größe der Flächen wird zur Beschichtung des gesamten Bauteils relativ viel Zeit benötigt, so dass die eingesetzten Beschichtungsstoffe lange Topfzeiten und lange Offenzeiten aufweisen müssen. Als Topfzeit wird im Folgenden die Zeitspanne zwischen dem Vermischen aller Komponenten eines Beschichtungsstoffs und dem Zeitpunkt, an dem die Vernetzungsreaktion im Beschichtungsstoff soweit fortgeschritten ist, dass der Beschichtungsstoff nicht mehr verarbeitet werden kann, bezeichnet. Als Offenzeit wird im Folgenden die Zeitspanne bezeichnet, in der ein auf eine Oberfläche applizierter Beschichtungsstoff-Film noch ohne Beeinträchtigung der Verlaufseigenschaften korrigiert werden kann.

Während der Applikation des Beschichtungsstoffs müssen die bereits beschichteten Flächen zusätzlich den Overspray, der bei der Lackierung der angrenzenden Flächen entsteht, aufnehmen können, ohne dass es zu Oberflächenstörungen beispielsweise durch einen schlechten Verlauf kommt. Als Overspray wird im Folgenden der beim Spritzlackieren verursachte Materialverlust des Beschichtungsstoffs bezeichnet. Der Materialverlust kann verursacht werden durch Vorbeispritzen aufgrund ungünstiger Orientierung der Spritzpistole zum Werkstück oder bei stark durchbrochenen Werkstücken wie Gittern. Overspray kann auch durch seitlich von den Werkstückoberflächen abströmende Beschichtungsstoff-Tröpfchen auftreten. Overspray-Aufnahme ist dabei die Eigenschaft eines applizierten Beschichtungsstoffs, Material aus einem Overspray so aufzunehmen, dass die gewünschte glatte Oberfläche des Films oder der Schicht erhalten bleibt.

Nach der Applikation des Beschichtungsstoff-Films oder der Beschichtungsstoff-Schicht ist eine möglichst schnelle Trocknung oder Aushärtung zur Beschichtung gewünscht. Eine forcierte Trocknung bei erhöhter Temperatur ist bei großen Bauteilen in der Regel nicht möglich, da hierzu entsprechend große Öfen erforderlich wären. Deshalb ist vor allem bei der Beschichtung oder Lackierung von sehr großen Bauteilen eine bei Raumtemperatur schnelle Trocknung besonders wünschenswert.

WO 2013/050623 offenbart eine vernetzbare Zusammensetzung, enthaltend eine Komponente mit mindestens zwei CH-aciden Protonen in aktivierten Methylen- oder Methingruppen, eine Komponente mit mindestens zwei aktivierten ungesättigten Gruppen und ein Katalysatorsystem, das einen basischen Michael-Additionskatalysator enthält oder generieren kann.

Aus EP 2374836 A1 sind in einer Michael-Addition vernetzende Bindemittelsysteme, im Folgenden als RMA-Systeme bezeichnet, bekannt, die ein günstiges Verhältnis von Topfzeit zu Trocknungszeit haben. Die beschriebenen Bindemittelsysteme zeigen bei langen Topfzeiten auch bei Raumtemperatur kurze Trocknungszeiten. Auf EP 2374836 A1 wird hiermit ausdrücklich als Bestandteil der Beschreibung Bezug genommen. Nachteil der bekannten RMA-Systeme ist, dass die daraus hergestellten Beschichtungsstoffe und Beschichtungen, insbesondere flexible Mattglanz-Beschichtungen, nicht die erforderlichen und üblichen Eigenschaften zeigen.

Es ist daher Aufgabe der vorliegenden Erfindung verbesserte Beschichtungsstoffe, Beschichtungen und Beschichtungssysteme auf Basis vom RMA-Systemen zur Verfügung zu stellen, die insbesondere zum Beschichten großer Bauteile wie Rotorblätter geeignet sind.

Diese Aufgabe wird gelöst durch Beschichtungsstoffe zur Herstellung einer Beschichtung gemäß Hauptanspruch. Weitere Ausführungsformen werden in den Neben- und Unteransprüchen sowie der Beschreibung offenbart.

Die erfindungsgemäßen Beschichtungsstoffe umfassen ein RMA-System, welches ein oder mehrere CH-acide Verbindungen A, ein oder mehrere vinyloge Carbonylverbindungen B und ein oder mehrere Katalysatoren C aufweist. Zusätzlich enthalten sie zumindest ein oder mehrere Lichtschutzmittel, ein oder mehrere Topfzeit-Verlängerer, ein oder mehrere Offenzeit-Verlängerer, ein oder mehrere anorganische und/oder organische Pigmente und ein oder mehrere Mattierungsmittel.

Im Folgenden werden unter dem Begriff Lichtschutzmittel Additive und Hilfsstoffe verstanden, die Beschichtungen gegen den Einfluss von UV-Licht schützen, insbesondere einen durch UV-Strahlung verursachten Polymerabbau verhindern oder zumindest deutlich verzögern. Unter dem Begriff Topfzoit-Verlängerer werden Additive und Hilfsstoffe verstanden, die als Bestandteil des verarbeitungsfertig angemischten Beschichtungsstoffs die Aushärtung des Beschichtungsstoffs vor der Applikation verzögern. Sie verdampfen während der Applikation, so dass die Härtung des applizierten Beschichtungsstoffs nicht beeinträchtigt, insbesondere nicht verlängert, wird. Unter dem Begriff Offenzeit-Verlängerer werden Additive und Hilfsstoffe verstanden, die auch nach der Applikation im Beschichtungsstoff verbleiben und dessen Aushärtung zur Beschichtung verzögern. Unter dem Begriff Mattierungsmittel werden Additive und Hilfsstoffe verstanden, die den Glanz einer Beschichtung vermindern oder einen Mattglanz erzeugen. Mattierungsmittel erzeugen in der Beschichtung die dafür notwendigen Oberflächenstrukturen ohne Beeinträchtigung sonstiger Merkmale und Eigenschaften.

Die erfindungsgemäßen Beschichtungsstoffe enthalten zumindest
- 10 bis 70, bevorzugt 15 bis 60, besonders bevorzugt 20 bis 55 Gew.-% ein oder mehrere CH-acide Verbindungen A ausgewählt aus Verbindungen der allgemeinen Formel I 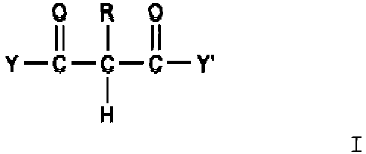 wobei
   - R: Wasserstoff, ein Alkyl- oder Arylrest,
   - Y: ein Alkyl-, Aralkyl-, Aryl-, Alkoxy-Rest oder eine Aminogruppe und,
   - Y': ein Alkyl-, Aralkyl-, Aryl-, Alkoxy-Rest oder eine Aminogruppe ist,
- 4 bis 40, bevorzugt 8 bis 35, besonders bevorzugt 10 bis 30 Gew.-% ein oder mehrere vinyloge Carbonylverbindungen B ausgewählt aus Acrylaten und Maleaten.
- 0,1 bis 15, bevorzugt 0,2 bis 10, besonders bevorzugt 0,3 bis 5 Gew.-% Gew.-% ein oder mehrere latente Basen als Katalysatoren C,
- 0,00001 bis 10, bevorzugt 0,5 bis 5, besonders bevorzugt 1 bis 3 Gew.-% ein oder mehrere Lichtschutzmittel, welche ausgewählt sind aus der Gruppe enthaltend Radikalfänger, UV-Absorber, Quencher und Peroxidzersetzer,
- 0,00001 bis 20, bevorzugt 0,01 bis 10, besonders bevorzugt 0,1 bis 5 Gew.-% ein oder mehrere Offenzeit-Verlängerer, welche ausgewählt sind aus der Gruppe enthaltend basische NH-funktionelle Verbindungen mit pKₐ-Werten zwischen 4 und 14,
- 0,00001 bis 20, bevorzugt 0,01 bis 15, besonders bevorzugt 0,1 bis 10 Gew.-% ein oder mehrere Topfzeit-Verlängerer, welche ausgewählt sind aus der Gruppe enthaltend Alkohole mit bis zu 6 Kohlenstoffatomen und Verdunstungszahlen unter 35,
- 0,00001 bis 70, bevorzugt 10 bis 65, besonders bevorzugt 15 bis 40 Gew.-% ein oder mehrere anorganische und/oder organische Pigmente, und
- 0,00001 bis 25, bevorzugt 1 bis 25, besonders bevorzugt 5 bis 20, ganz besonders bevorzugt 8 bis 15 Gew.-% ein oder mehrere Mattierungsmittel, welche ausgewählt sind aus der Gruppe enthaltend mikronisierte amorphe Kieselsäuren, mikronisierte und gefällte Wachse und mikronisierte Polymere,
wobei sich die Mengenangaben jeweils auf die Gesamtmenge des Beschichtungsstoffs beziehen.

Erfindungsgemäß werden die Verbindungen A und B in einem Stoffmengenverhältnis A:B von 0,5:1 bis 2:1, bevorzugt von 0,75:1 bis 1,6:1, besonders bevorzugt von 0,9:1 bis 1,3:1, ganz besonders bevorzugt von 0,95:1 bis 1,1:1 eingesetzt, wobei die Stoffmengen auf die aciden Protonen der Verbindungen A und auf die vinylogen Carbonylgruppen der Verbindungen B bezogen sind.

Erfindungsgemäß werden Katalysatoren C und Verbindungen A in einem Stoffmengenverhältnis C:A von 0,8:1 bis 2,5:1, bevorzugt 1,1:1 bis 1,9:1, besonders bevorzugt 1,3:1 bis 1,7:1 eingesetzt, wobei die Stoffmengen auf das Kation X⁺ des Katalysators C und die aciden Protonen der Verbindungen A bezogen sind.

Erfindungsgemäß geeignete CH-acide Verbindungen A sind Malonsäureester, Acetessigsäureester oder deren Gemische. Bevorzugt sind Malonsäureester mit oligomeren und polymeren Substituenten beispielsweise auf der Basis von Polyestern, Polyurethanen, Polyacrylaten, Epoxidharzen, Polyamiden oder Polycarbonaten. Besonders bevorzugt sind Malonsäureester mit oligomeren und polymeren Substituenten auf Basis von Polyestern, Polyurethanen und/oder Polycarbonaten. Die eingesetzten Acetessigsäureester enthalten bevorzugt oligomere und polymere Substituenten beispielsweise auf der Basis von Polyalkoholen, Polyvinylalkoholen, Epoxidharzen, hydroxyfunktionellen Polyethern, Polyestern oder Polyacrylaten. Besonders bevorzugt sind Acetessigsäureester mit oligomeren und polymeren Substituenten auf Basis von Polyestern und/oder Polyacrylaten. Ganz besonders bevorzugt sind Verbindungen ausgewählt aus der Gruppe enthaltend Malonsäureester mit oligomeren und polymeren Substituenten auf der Basis von Polyestern, die aus der Umsetzung von zumindest Malonsäure, Malonsäuredimethylester und/oder Malonsäurediethylester mit Hexahydrophthalsäure und/oder deren Anhydrid und Neopentylglycol erhalten werden, sowie Acetessigsäureester mit oligomeren und polymeren Substituenten auf der Basis Polyestern, die aus der Umsetzung von zumindest Acetessigsäure, Acetessigsäuremethylester und/oder Acetessigsäureethylester mit Hexahydrophthalsäure und/oder deren Anhydrid und Neopentylglycol erhalten werden.

Erfindungsgemäß geeignete vinyloge Carbonylverbindungen B sind beispielsweise ungesättigte acryloyl-funktionale Acrylate und/oder Maleate. Erfindungsgemäß bevorzugt sind Acrylester aus Verbindungen enthaltend 1 bis 20 Kohlenstoffatome und zumindest 2, bevorzugt 2 bis 6, Hydroxylgruppen. Erfindungsgemäß bevorzugt sind weiterhin Polyester aus Maleinsäure, Fumarsäure und/oder Itaconsäure oder deren Anhydride umgesetzt mit di- oder polyvalenten Hydroxylverbindungen, die eine monovalente Hydroxyl- oder Carboxylverbindung enthalten können. Weiterhin bevorzugt sind Harze wie Polyester, Polyurethane, Polyether und/oder Alkydharze, welche entsprechend aktivierte ungesättigte Gruppen enthalten wie beispielsweise Urethanacrylate, Polyetheracrylate, polyfunktionelle Polyacrylate, Polyalkylmaleate und Polyacrylate, die aus der Umsetzung von Acrylsäure mit Epoxidharzen erhalten werden. Erfindungsgemäß besonders bevorzugt sind Butandioldiacrylat, Hexandioldiacrylat, Trimethylolpropantriacrylat, Pentaerythritoltetraacrylat und Ditrimethylolpropantetraacrylat und Dipentaerithritolhexaacrylat sowie Dipropylenglykoldiacrylat und Tripropylenglykoldiacrylat.

Geeignete latent-basische Verbindungen für die Katalysatoren C sind beispielsweise substituierte Carbonsäuresalze der Formel II: 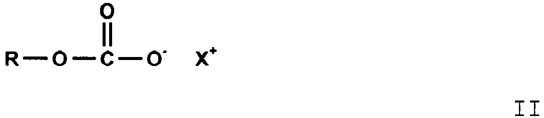 worin
- R: Wasserstoff, Alkyl- oder Aralkyl- (Ar-R) oder ein Polymer ist,
- X⁺: ein Alkali- oder Erdalkalimetall-Kation, insbesondere Lithium, Natrium oder Kalium ist, oder ein quaternäres Ammonium- oder Phosphoniumsalz der Formel (R')₄Y⁺ ist, worin Y
Y Stickstoff oder Phosphor ist,
R' gleich oder verschieden, Wasserstoff, Alkyl-, Aral- oder Aralkyl- oder ein Polymer ist
und worin
R und R' eine Ringstruktur bilden können oder
R und R' ein Polymer sein können.

Erfindungsgemäß bevorzugt ist R eine Alkylgruppe oder eine Aralkylgruppe, besonders bevorzugt eine Alkylgruppe mit 1 bis 4 Kohlenstoffatomen. Die Carbonatgruppe und das Kation X⁺ können darüber hinaus auch an einem Molekül mit der entsprechenden Struktur vorhanden sein. Weiterhin bevorzugt ist R' eine Alkylgruppe, besonders bevorzugt eine Alkylgruppe mit 1 bis 4 Kohlenstoffatomen, besonders bevorzugt mit 3 bis 4 Kohlenstoffatomen. Erfindungsgemäß bevorzugt werden Ammonium- und/oder Phosphoniumcarbonate eingesetzt. Geeignete Ammoniumcarbonate sind beispielsweise Tetrahexylammoinummethylcarbonat, Tetrahexylammoniumhydrogencarbonat, Tetradecanyltrihexylammoinummethylcarbonat, Tetradecylammoinummethylcarbonat, Tetrabutylammoinummethylcarbonat, Tetrabutylammoniumethylcarbonat, Tetrabutylammoniumhydrogencarbonat, Tetrapropylammoniummethylcarbonat, Tetrapropylammoniumethylcarbonat, Tetrapropylammoniumhydrogencarbonat, Benzyltrimethylammoniummethylcarbonat, Trihexylmethylammoniummethylcarbonat oder Trioctylmethylammoniummethylcarbonat. Besonders bevorzugt werden Tetrabutylammoniummethylcarbonat, Tetrabutylammoniumethylcarbonat, Tetrabutylammoniumhydrogencarbonat, Tetrapropylammoniummethylcarbonat, Tetrapropylammoniumethylcarbonat, Tetrapropylammoniumhydrogencarbonat und deren Gemische eingesetzt.

Geeignete Lichtschutzmittel sind Radikalfänger wie sterisch gehinderte aliphatische Amine z.B. auf Basis substituierter 2,2,6,6-Tetramethylpiperidine, UV-Absorber wie 2-Hydroxyphenylbenztriazole, 2-Hydroxybenzophenone, 2-Hydroxyphenyltriazine oder Oxalanilide, sowie Quencher wie organische Nickelverbindungen und Peroxidzersetzer wie Thioether oder Phosphite. Bevorzugt eingesetzt werden Radikalfänger beispielsweise sterisch gehinderte aliphatische Amine auf Basis substituierter 2,2,6,6-Tetramethylpiperidine, und/oder UV-Absorber beispielsweise 2-Hydroxyphenylbenztriazole, 2-Hydroxybenzophenone, 2-Hydroxyphenyltriazine und Oxalanilide. Besonders bevorzugt eingesetzt werden substituierte 2,2,6,6-Tetramethylpiperidine, 2-Hydroxyphenyltriazine, 2-Hydroxybenzophenone und deren Gemische.

Geeignete Topfzeit-Verlängerer sind Alkohole mit bis zu 6, bevorzugt bis zu 4, besonders bevorzugt bis zu 3 Kohlenstoffatomen, die eine Verdunstungszahl unter 35, bevorzugt unter 20 aufweisen. So können erfindungsgemäß beispielsweise Methanol, Ethanol, n-Propanol, i-Propanol, n-Butanol, i-Butanol und deren Gemische eingesetzt werden.

Geeignete Offenzeit-Verlängerer sind basische NH-funktionelle Verbindungen mit einem pKₐ-Wert zwischen 4 und 14 auf. Bevorzugt sind Succinimide, 1,2,4,-Triazole, 1,2,3,-Benzotriazole, 5,5-Diphenylhydantoine, Hydantoine, (RS)-3-Ethyl-3-methylpyrrolidin-2,5-dion und deren Gemische. Besonders bevorzugt sind Succinimide, 1,2,4,-Triazole, 1,2,3,-Benzotriazole und deren Gemischen.

Geeignete anorganische Pigmente sind Titandioxid, Eisenoxide, Chromoxide, Chromtitanate, Bismutvanadat, Cobaltblau und Ruße. Bevorzugt eingesetzte anorganische Pigmente sind Titandioxid, Eisenoxide und Ruße. Geeignete organische Pigmente sind Pigment Yellow 151, Pigment Yellow 213, Pigment Yellow 83, Pigment Orange 67, Pigment Orange 62, Pigment Orange 36, Pigment Red 170, Pigment Violet 19, Pigment Violet 23, Pigment Blue 15:3, Pigment Blue 15:6, Pigment Green 7. Bevorzugt eingesetzte Pigmente sind Pigment Yellow 151, Pigment Orange 67, Pigment Red 170, Pigment Violet 19, Pigment Blue 15:3, Pigment Green 7.

Geeignete Mattierungsmittel sind mikronisierte amorphe Kieselsäuren, wobei Silicagele oder Fällungskieselsäuren bevorzugt sind, mikronisierte und gefällte Wachse, wobeiPolyethylenwachse, Polypropylenwachse, Polyamidwachse oder PTFE-Wachse bevorzugt sind, und mikronisierte Polymere, wobei Harnstoffaldehydharze bevorzugt sind.

In einer weiteren Ausführungsform der vorliegenden Erfindung können den Beschichtungsstoffen weitere Additive und Hilfsstoffe wie Dispergieradditive, funktionale Füllstoffe und/oder Verlaufsadditive zugesetzt werden, um die erforderlichen Eigenschaften des Beschichtungsstoffs und/oder der Beschichtung zu verbessern.

Die erfindungsgemäßen Beschichtungsstoffe können weiterhin bis zu 25, bevorzugt 0,00001 bis 8, besonders bevorzugt 0,00001 bis 5 Gew.-% Dispergieradditive enthalten, wobei sich die Mengenangaben jeweils auf die Gesamtmenge des Beschichtungsstoffs beziehen. Geeignete Dispergieradditive sind beispielsweise hochmolekulare Blockcopolymere mit pigmentaffinen Gruppen, hochverzweigte Polyester und Acrylat-Polyester-Copolymere mit pigmentaffinen Gruppen. Bevorzugt eingesetzte Dispergieradditive sind hochmolekulare Blockcopolymere mit pigmentaffinen Gruppen.

Die Beschichtungsstoffe können weiterhin bis zu 60, bevorzugt 0,00001 bis 50, besonders bevorzugt 0,00001 bis 40 Gew.-% funktionale Füllstoffe enthalten, wobei sich die Mengenangaben jeweils auf die Gesamtmenge des Beschichtungsstoffs beziehen. Geeignete Füllstoffe sind beispielsweise Carbonate wie Kreide, Kalksteinmehl, Calcit, gefälltes Calciumcarbonat, Dolomit, Bariumcarbonat, Sulfate wie Baryt, Blanc fixe, Calciumsulfat, Silikate wie Talk, Pyrophyllit, Chlorit, Hornblende, Glimmer, Kaolin, Wollastonit, Schiefermehl, gefällte Calciumsilikate, gefällte Aluminiumsilikate, gefällte Calcium-Aluminiumsilikate, gefällte Natrium-Aluminiumsilikate, Feldspäte, Mullit, Kieselsäuren wie Quarz, Quarzgut, Cristobalit, Kieselgur, Kieselerde, gefällte Kieselsäure, Bimsmehl, Perlit, Calcium-Metasilikate, Fasern aus Schmelzen von Glas oder Basalten, Glasmehl, Glaskugeln und Schlacken. Bevorzugt eingesetzte Füllstoffe sind Bariumsulfat, Calciumcarbonat und/oder Talkum.

Die erfindungsgemäßen Beschichtungsstoffe können weiterhin bis zu 10, bevorzugt 0,00001 bis 5, besonders bevorzugt 0,00001 bis 2 Gew.-% Verlaufsadditive enthalten, wobei sich die Mengenangaben jeweils auf die Gesamtmenge des Beschichtungsstoffs beziehen. Geeignete Verlaufsadditive sind beispielsweise mittel- bis hochviskose Polyacrylate mit mittlerem Molekulargewicht, Silikone, modifizierte Silikone, Fluortenside und schwerflüchtige Lösemittel mit Verdampfungszahlen von 150 bis 200. Bevorzugt eingesetzte Verlaufsadditive sind Silikone, modifizierte Silikone und Fluortenside.

In weiteren erfindungsgemäßen Ausführungsformen enthalten die Beschichtungsstoffe darüber hinaus bis zu 50, bevorzugt 0,00001 bis 40, besonders bevorzugt 0,00001 bis 30 Gew.-% aprotische Lösemittel, wobei sich die Mengenangaben jeweils auf die Gesamtmenge des Beschichtungsstoffs beziehen. Unter dem Begriff aprotische Lösemittel werden im Folgenden Lösemittel verstanden, die kein ionisierbares Proton im Molekül enthalten. Geeignete aprotische Lösemittel sind beispielsweise aliphatische Kohlenwasserstoffe, cycloaliphatische Kohlenwasserstoffe, aromatische Kohlenwasserstoffe, Ketone, Ester, Ether, Etherester insbesondere Ethylacetat, Butylacetat, Aceton, n-Butanon, Methylisobutylketon, Methoxypropylacetat sowie Dimethylsulfoxid. Bevorzugt eingesetzte Lösungsmittel sind Ethylacetat, Butylacetat, Aceton, n-Butanon, Methylisobutylketon, Methoxypropylacetat und deren Gemische.

Die als erfindungsgemäße Katalysatoren C eingesetzten Verbindungen sind latente Basen, da das Carbonatsalz gemäß Formel II im Gleichgewicht mit seinen Dissoziationsprodukten Kohlendioxid und der entsprechenden Hydroxid- oder Alkoxy-Base steht. Solange Kohlenmonoxid aus dem System nicht entweichen kann, liegt das Gleichgewicht auf der Seite des Carbonatsalzes. Erst wenn Kohlendioxid entfernt wird und somit eine hinreichende Menge an Base vorliegt, startet die Vernetzung mittels Michael-Addition. Bei einer Lagerung der erfindungsgemäßen Beschichtungsstoffe in geschlossen Behältern, aus denen Kohlendioxid nicht entweichen kann, kann der erfindungsgemäße Beschichtungsstoff grundsätzlich als ein Einkomponentensystem formuliert werden. Die Lagerstabilität kann jedoch erhöht werden, wenn die einzelnen Bestandteile des erfindungsgemäßen Beschichtungsstoffs in Mehrkomponentensystemen formuliert werden. So kann beispielsweise eine Katalysatorkomponente, welche die Katalysatoren C enthält, erst kurz vor der Verarbeitung mit den Bindemittelkomponenten, welche die CH-acide Verbindungen A und die vinylogen Carbonylverbindungen B enthalten, vermischt werden.

Erfindungsgemäß können die CH-aciden Verbindungen A und die vinylogen Carbonylverbindungen B zusammen mit den eingesetzten Lichtschutzmitteln, Offenzeit-Verlängerern und Topfzeit-Verlängerern in einer Bindemittelkomponente enthalten sein. Diese Bindemittelkomponente kann weiterhin Pigmente, Füllstoffe, zusätzliche weitere Additive sowie Lösemittel enthalten. Die Katalysatoren C sowie gegebenenfalls weitere Lösemittel und Topfzeit-Verlängerer können in einer Katalysatorkomponente enthalten sein. In einer bevorzugten Ausführungsform können die CH-acide Verbindungen A in einer ersten Bindemittelkomponente, die vinylogen Carbonylverbindungen B in einer zweiten Bindemittelkomponente und die Katalysatoren C in einer Katalysatorkomponente vorliegen. In einem solchen Dreikomponenten-System sind bevorzugt die CH-aciden Verbindungen A zusammen mit den Offenzeit-Verlängerern und Lichtschutzmitteln in der ersten Bindemittelkomponente enthalten. Gegebenenfalls kann diese erste Bindemittelkomponente weiterhin Pigmente und Füllstoffe sowie zusätzliche Additive enthalten. In der zweiten Bindemittelkomponente sind bevorzugt die vinylogen Carbonylverbindungen B enthalten. Weiterhin kann auch die zweite Bindemittelkomponente Pigmente, Füllstoffe und zusätzliche Additive enthalten. In der Katalysatorkomponente sind die Katalysatoren C enthalten. Weiterhin kann die Katalysatorkomponente Lösemittel und Topfzeit-Verlängerer enthalten.

Es ist bekannt, dass die Zugabe weiterer Bestandteile, die zur Herstellung einer Beschichtung üblich sind, die Lagerstabilität der RMA-Systeme verringert. Die erfindungsgemäßen Beschichtungsstoffe mit ihrer besonderen Auswahl an Lichtschutzmitteln, Offenzeit-Verlängern, Topfzeit-Verlängern, Pigmenten, Mattierungsmitteln, Dispergieradditiven, Verlaufsadditiven, funktionalen Füllstoffen und aprotischen Lösemitteln weisen im Vergleich zu bisher bekannten Beschichtungsstoffen auf Basis von RMA-Systemen eine unerwartete hohe Lagerstabilität auf.

Weiterhin werden auch die Eigenschaften von Beschichtungen, welche aus Beschichtungsstoffen auf der Basis von RMA-Systemen hergestellt sind, im Unterschied zu Beschichtungen, welche aus Beschichtungstoffen auf Basis üblicher Bindemitteln wie beispielsweise Epoxidharzen oder Polyurethanen hergestellt sind, stark vom Vorhandensein weiterer Bestandteile des Beschichtungstoffs beeinträchtigt. Es hat sich überraschenderweise gezeigt, dass die erfindungsgmäßen Beschichtungsstoffe Beschichtungen ergeben, welche die für eine Verwendung bei Bauteilen für Windkraftanlagen wie Rotorblättern erforderlichen Eigenschaften aufweisen, insbesondere Bewitterungsatabilität, Tieftemperaturelastizität, Abriebbeständigkeit und Beständigkeit gegen Regen- und Sand-Erosion.

In einer besonders bevorzugten Ausführungsform umfassen die erfindungsgemäßen Beschichtungsstoffe zumindest
- 10 bis 70, bevorzugt 16 bis 60, besonders bevorzugt 20 bis 55 Gew.-% Malonsäureester mit oligomeren und polymeren Substituenten auf der Basis von Polyestern, die aus der Umsetzung von zumindest Malonsäure, Malonsäuredimethylester und/oder Malonsäurediethylester mit Hexahydrophthalsäure und/oder deren Anhydrid und Neopentylglycol erhalten werden, sowie Acetessigsäureester mit oligomeren und polymeren Substituenten auf der Basis Polyestern, die aus der Umsetzung von zumindest Acetessigsäure, Acetessigsäuremethylester und/oder Acetessigsäureethylester mit Hexahydrophthalsäure und/oder deren Anhydrid und Neopentylglycol erhalten werden, als CH-acide Verbindungen A
- 4 bis 40, bevorzugt 8 bis 35, besonders bevorzugt 10 bis 30 Gew.-% Butandioldiacrylat, Hexandioldiacrylat, Trimethylolpropantriacrylat, Pentaerythritoltetraacrylat, Ditrimethylolpropantetraacrylat und/oder Dipentaerithritolhexaacrylat als vinyloge Carbonylverbindungen B,
- 0,1 bis 15, bevorzugt 0,2 bis 10, besonders bevorzugt 0,3 bis 5 Gew.-% Tetrabutylammoniummethylcarbonat, Tetrabutylammoniumethylcarbonat, Tetrabutylammoniumhydrogencarbonat, Tetrapropylammoniummethylcarbonat, Tetrapropylammoniumethylcarbonat, Tetrapropylammoniumhydrogencarbonat oder deren Gemische als Katalysatoren C,
- 0,00001 bis 10, bevorzugt 0,5 bis 5, besonders bevorzugt 1 bis 3 Gew.-% substituierte 2,2,6,6-Tetramethylpiperidine, 2-Hydroxyphenyltriazine, 2-Hydroxybenzophenone oder deren Gemische als Lichtschutzmittel,
- 0,00001 bis 20, bevorzugt 0,01 bis 10, besonders bevorzugt 0,1 bis 5 Gew.-% Succinimide, 1,2,4,-Triazole, 1,2,3,-Benzotriazole oder deren Gemische als Offenzeit-Verlängerer,
- 0,00001 bis 20, bevorzugt 0,01 bis 15, besonders bevorzugt 0,1 bis 10 Gew.-% Methanol, Ethanol, n-Propanol, i-Propanol, n-Butanol, i-Butanol oder deren Gemische als Topfzeit-Verlängerer,
- 0,00001 bis 70, bevorzugt 10 bis 65, besonders bevorzugt 15 bis zu 40 Gew.-% Titandioxid, Eisenoxide, Ruße, Pigment Yellow 151, Pigment Orange 67, Pigment Red 170, Pigment Violet 19, Pigment Blue 15:3, Pigment Green 7 oder deren Gemische als Pigmente, und
- 0,00001 bis 25, bevorzugt 1 bis 25, besonders bevorzugt 5 bis 20, ganz besonders bevorzugt 8 bis 15 Gew.-% mikronisierte und gefällte Polyethylenwachse, Polypropylenwachse, Polyamidwachse, PTFE-Wachse sowie mikronisierte Harnstoffaldehydharze oder deren Gemische als Mattierungsmittel,
- 0 bis 25, bevorzugt 0,00001 bis 8, besonders bevorzugt 0,00001 bis 5 Gew.-% hochmolekulare Blockcopolymere mit pigmentaffinen Gruppen als Dispergieradditive,
- 0 bis 10, bevorzugt 0,00001 bis 5, besonders bevorzugt 0,00001 bis 2 Gew.-% Silikone, modifizierte Silikone und/oder Fluortenside als Verlaufsadditive,
- 0 bis 60, bevorzugt 0,00001 bis 40, besonders bevorzugt 0,00001 bis zu 30 Gew.-% Bariumsulfat, Calciumcarbonat und/oder Talkum als funktionale Füllstoffe und
- 0 bis 50, bevorzugt 0,00001 bis 40, besonders bevorzugt 0,00001 bis 30 Gew.-% Ethylacetat, Butylacetat, Aceton, n-Butanon, Methylisobutylketon, Methoxypropylacetat oder deren Gemische als aprotische Lösemittel,
wobei sich die Mengenangaben jeweils auf die Gesamtmenge des Beschichtungsstoffs beziehen.

Die erfindungsgemäßen Beschichtungsstoffe können zur Herstellung von flexiblen Beschichtung eingesetzt werden wie sie beispielsweise zur Beschichtung von Rotorblättern von Windkraftanlagen verwendet werden. Die erfindungsgemäßen Beschichtungsstoffe und Beschichtungen weisen gegenüber den bisher bekannten RMA-Beschichtungsstoffen und RMA-Beschichtungen überraschenderweise eine deutlich höhere Lagerstabilität auf. Auch zeigen sie ein verbessertes Trockungsverhalten. Die aus den erfindungsgemäßen Beschichtungsstoffen erhaltenen Beschichtungen weisen darüber hinaus eine verbesserte Lichtstabilität auf, insbesondere weniger Vergilbung und höhere Glanzhaltung.

Die erfindungsgemäßen Beschichtungsstoffe weisen Topfzeiten größer gleich 1 Stunde, bevorzugt größer gleich 2 Stunden, besonders bevorzugt zwischen 2 und 4 Stunden auf. Üblicherweise wird die Topfzeit über die Auslaufzeit aus einem Auslaufbecher bestimmt. Das Ende der Topfzeit ist festgelegt, als der Zeitpunkt, in dem die Auslaufzeit den doppelten Wert der Startauszeit zeigt. Die Prüfmethode wird unten in den Beispielen ausführlich beschrieben. Weiterhin zeigen die erfindungsgemäßen Beschichtungsstoffe Offenzeiten von größer gleich 15 Minuten, bevorzugt größer 20 Minuten, besonders bevorzugt größer gleich 25 Minuten. Neben den langen Topf- und Offenzeiten zeigen die erfindungsgemäßen Beschichtungsstoffe überraschenderweise ein ungewöhnlich breites Klimafenster, in dem sie ohne Beeinträchtigung verarbeitet werden können. Sie sind beispielsweise bei

Temperaturen bis zu 45 °C und bei relativer Luftfeuchte bis zu 99 % verarbeitbar. Darüber hinaus zeigen sie eine lange Overspray-Aufnahme, beispielsweise über einen Zeitraum von mehr als 15 Minuten. Im Unterschied zu üblicherweise eingesetzten Beschichtungsstoffen auf PolyurethanBasis weisen die erfindungsgemäßen Beschichtungsstoffe deutlich verkürzte Trocknungszeiten auf.

In einer bevorzugten Ausführungsform werden die erfindungsgemäßen Beschichtungsstoffe zur Herstellung eines Decklacks für Substrate aus faserverstärkten Kunststoffen eingesetzt. Bauteile aus faserverstärkten Kunststoffen müssen beim Einsatz im Außenbereich hinreichend bewitterungsstabil sein, d.h. resistent gegenüber UV-Strahlung und Feuchte sein. Daher werden Bauteile im Außenbereich wie beispielsweise Rotorblätter für Windkraftanlagen in der Regel durch die Aufbringung eines entsprechenden Decklacks geschützt. Decklacke für Rotorblätter müssen darüber hinaus bei Umgebungstemperaturen zwischen -40 bis +60 °C hinreichend flexibel und ausreichend fest sein, um Erosionseffekte durch Partikel wie Staub, Eispartikel oder Regentropfen zu vermeiden oder zumindest zu vermindern. Die erfindungsgemäßen Beschichtungen weisen neben hohen Bewitterungsstabilitäten die erforderlichen Tieftemperaturelastizitäten, Abriebbeständigkeiten und Beständigkeiten gegen Regen- und Sand-Erosion auf.

Mit ihren Eigenschaften sind die erfindungsgemäßen Beschichtungsstoff vor allem für eine Verwendung zur Beschichtung großer Bauteile geeignet. Sie sind insbesondere zur Beschichtung großflächiger Bauteile aus faserverstärkten Kunststoffsubstraten wie sie beispielsweise zum Bau von Rotorblättern in Windkraftanlagen verwendet werden.

Die vorliegende Erfindung betrifft auch Verfahren zur Beschichtung von Bauteilen. Die erfindungsgemäßen Verfahren umfassen dabei die Schritte (a) Applizieren des erfindungsgemäßen Beschichtungsstoffs auf der Oberfläche eines Substrats und (b) Aushärten des applizierten Beschichtungsstoffs für 0,5 bis 12, bevorzugt 1 bis 6, besonders bevorzugt 1 bis 4 Stunden bei Temperaturen zwischen 5 bis 45, bevorzugt 15 bis 40, besonders bevorzugt 20 bis 35 °C.

Die erfindungsgemäßen Beschichtungsstoffe weisen überdurchschnittlich hohe Festkörpergehalte auf und enthalten dementsprechend geringe Anteile an leichtflüchten organischen Substanzen wie beispielsweise Lösemitteln. Der Festkörpergehalt ist definiert als der Massenanteil eines Beschichtungsstoffs, der beim Eindampfen bei 105 °C nach 30 Minuten als Rückstand verbleibt. Im Wesentlichen besteht der Festkörper in der Regel aus Bindemittel, nicht flüchtigen Additiven, Pigmenten und Füllstoffen. Die Festkörpergehalte der erfindungsgemäßen Beschichtungsstoffe liegen zwischen 65 und 95, bevorzugt 70 und 90, besonders bevorzugt zwischen 75 und 85 Gew.-%, bezogen auf das Gesamtgewicht des Beschichtungsstoffs.

Üblicherweise sind Beschichtungsstoffe mit hohen Festkörpergehalten mit den üblichen Spritzverfahren schlecht verarbeitbar. Im Unterschied dazu können die erfindungsgemäßen Beschichtungsstoffe ohne Weiteres mit Hilfe von hydraulischem Höchstdruckspritzen (Airless), Airless-Spritzen mit Luftunterstützung (Airmix) sowie mit Hilfe von pneumatischen Spritzen oder Druckluftspritzen appliziert werden. Auch bei diesen Applikationsverfahren werden hier überraschenderweise Oberflächen hoher Güte erhalten. Erfindungsgemäß besonders geeignet sind Airless- und Airmix-Spritzverfahren sowie die Applikation mittels Rolle.

Bauteile aus faserverstärkten Kunststoffen weisen in der Regel sehr raue Oberflächen auf, die vor einer Beschichtung geglättet werden müssen beispielsweise durch Spachteln und Schleifen der Oberfläche. Diese Vorbehandlungsverfahren sind bekannt und dem Fachmann geläufig. Die erfindungsgemäßen Beschichtungen werden in der Regel auf so vorbehandelte Oberflächen aufgebracht. Sie können dabei mit so hoher Schichtdicke appliziert werden, dass die ausgehärtete Beschichtung auch bei ungenügend vorbehandelten Substratoberflächen keine Beeinträchtigungen ihrer Oberflächenqualität zeigt. Die erfindungsgemäßen Beschichtungen können dabei Trockenschichtdicken zwischen 80 bis 150 µm aufweisen.

In einer weiteren Ausführungsform des Verfahrens werden alle Komponenten des eingesetzten Beschichtungsstoffs vor der Applikation vermischt. Die Mischung kann dabei manuell oder maschinell erfolgen. In einer weiteren Ausführungsform kann ein Beschichtungssystem mit zumindest einer zusätzlichen Beschichtung hergestellt werden, indem auf der ersten Beschichtung weitere Beschichtungsstoffe appliziert und ausgehärtet werden. Diese zweite Beschichtung kann dabei auch nur partiell aufgebracht werden, um farbige Muster wie leuchtfarbige Warnstreifen oder besondere Verstärkungen wie einen Kantenschutz zu erzeugen.

Da die erfindungsgemäßen Beschichtungsstoffe bei Raumtemperatur ausgehärtet werden können, sind sie vor allem zur Beschichtung von großen Bauteilen wie Rotorblätter von Windkraftanlagen geeignet. In den zurzeit betriebenen Windkraftanlagen werden Rotorblätter mit Blattlängen von zu bis 65 Metern im Onshore- und bis zu 85 Metern im Offshorebereich eingesetzt.

### Beispiele

Die Herstellung der Beschichtungsstoffe erfolgt nach den lacktechnischen Standards, welche dem Fachmann bekannt und geläufig sind. Die in der Beispielrezeptur 1 eingesetzte Katalysatorlösung wird hergestellt indem zu einer Lösung von 17,1 g Tetrabutylammoniumhydroxid in 14 g Wasser 42,8 g Diethylcarbonat und 26,1 g i-Propanol gegeben werden.

**Beispielrezeptur 1: Decklack**

| **Substanz** | **Menge [Gew.-%]** |
|---|---|
| **Bindemittelkomponente 1** | |
| malonatfunktioneller Polyester mit einer Konzentration an aciden Protonen von 5,66 mol/kg bezogen auf den lösemittelfreien Polyester, 85%ig in Butylacetat | 27 |
| Titandioxid | 25 |
| hochmolekulares Blockcopolymer mit pigmentaffinen Gruppen | 1 |
| Bis(1,2,2,6,6-pentamethyl-4-piperidinyl)-sebacat | 1 |
| Succinimid | 0,8 |
| Butylacetat | 11 |
| polyester-modifiziertes Polydimethylsiloxan | 0,2 |
| mikronisiertes Harnstoffaldehydharz | 11 |

| **Bindemittelkomponente 2** | |
|---|---|
| Ditrimethylolpropantetraacrylat | 11 |
| Hexandioldiacrylat | 4 |

| **Katalysatorkomponente** | |
|---|---|
| Katalysatorlösung | 3 |
| Ethanol | 3 |
| Methylethylketon | 2 |

Für eine Beurteilung der Lagerstabilität der Beschichtungsstoffe wurden Topfzeit und Trockungszeit der Beispielrezeptur 1 bestimmt. Dabei wurden jeweils Proben nach 1 Tag Lagerung bei 23 °C, nach 28 Tage Lagerung bei 40 °C und 1 Jahr Lagerung bei 20 bis 23 °C geprüft bzw. zur Herstellung einer Beschichtung eingesetzt.

Bestimmung der Topfzeit: Die Topfzeit wird mit Hilfe eines Auslaufbechers bestimmt. Bei diesem Verfahren wird eine Flüssigkeit in einen Becher mit definiertem Volumen gefüllt, der in seinem Boden eine definierte Düse aufweist. Der Beschichtungsstoff läuft durch die Düse aus, wobei die Zeit vom Austritt an bis zum Abriss des Flüssigkeitsstrahls als Auslaufzeit gemessen wird. Sämtliche Vorbereitung und Messungen werden bei einer Temperatur von 23 °C durchgeführt. Zunächst werden alle Komponente des Beschichtungsstoffs vermischt und sofort die Auslaufzeit der Mischung gemessen (StartAuslaufzeit). Die Messung wird in regelmäßigen Zeitabständen wiederholt. Das Ende der Topfzeit ist erreicht, wenn die Auslaufzeit das Doppelte der Startauslaufzeit aufweist.

Bestimmung der Trocknungszeit: Zur Bestimmung der Trocknungszeit wird ein Trocknungsrecorder, Trocknungszeitmessgerät der Firma BYK Gardener, eingesetzt. Hierbei wird der zu untersuchende Beschichtungsstoff mit Hilfe eines Filmziehers gleichmäßig auf Glasstreifen appliziert. Die Glasstreifen werden anschließend in einen linearen Recorder gelegt. Dann werden Nadeln auf die Beschichtung aufgesetzt und mit einer definierten, konstanten Geschwindigkeit über den trocknenden Film gezogen. Dabei entsteht ein charakteristisches Trocknungsbild der Beschichtung, in dem die einzelnen Zeitabschnitte die unterschiedlichen Härtungsstadien zeigen: Verlauf oder Offenzeit, Grundspur, Filmaufriss und Oberflächenspur. Die Aushärtung des Beschichtungsstoffs beginnt dabei mit dem Ende der Offenzeit, d.h. in dem Zeitpunkt, an dem die durch die Nadel in den applizierten Film geritzte Spur sichtbar bleibt. Sie endet mit der Oberflächenspur, d.h. in dem Zeitpunkt, an dem die Nadel keine sichtbar Spur mehr im applizierten Film hinterlässt.

Zur Beurteilung Lagerstabilität des Beschichtungsstoffs wurde auch die Qualität der Beschichtungen, die aus unterschiedlich gelagerten Beschichtungsstoffen der Beispielrezeptur 1 hergestellt wurden, untersucht. Hierzu wurden Bruchdehnung und die Bewitterungsstabilität bestimmt. Es wurden jeweils Proben nach 1 Tag Lagerung bei 23 °C, nach 28 Tagen Lagerung bei 40 °C und bei 1 Jahr Lagerung bei 20 bis 23 °C zur Herstellung einer Beschichtung eingesetzt. Zur Herstellung der Probekörper wurde Beispielrezeptur 1 auf grundierte Aluminiumplatten mittels Becherpistole appliziert und bei Raumtemperatur ausgehärtet.

Bestimmung der Bruchdehnung: Die Bruchdehnung wird über Dornbiegeversuch bestimmt. Dazu werden die Probekörper, um einen Dorn gebogen. Je kleiner der Radius des Dorns, um den die Platte ohne eine Beschädigung oder Bruch der Beschichtung gebogen werden kann, desto größer ist die Bruchdehnung der Beschichtung. Als Messwert wird der Durchmesser des Dorns angegeben.

Bestimmung der Bewitterungsstabilität: Zur Beurteilung der Bewitterungsstabilität der Beschichtungen werden hier die Änderung des Farbtons (ΔE) und die Änderung des Glanzwerts (Restglanzwert) herangezogen. Dazu werden zunächst Farbton und Glanz der Probekörper bestimmt. Anschließend werden die Probekörper einer künstlichen Bewitterung ausgesetzt, welche durch die zyklische Anwendung von Strahlung, Feuchtigkeit und erhöhter Temperatur eine Freibewitterung simuliert. Dazu wird der Prüfzyklus aus Trocknungsphase und Kondensationsphase 500 Stunden lang wiederholt. In der Trocknungsphase des Prüfzyklus werden die Probekörper 4 Stunden mit einer QUV-B (313) Lampe bei 60°C Schwarztafeltemperatur bestrahlt, in der anschließenden 4 stündigen Kondensationsphase im Wasserdampf kondensiert bei 50°C Schwarztafeltemperatur der Wasserdampf auf den Probekörpern. Nach der Bewitterung werden wieder Farbton und Glanz der Probekörper bestimmt. Die Farbtonänderungen der Beschichtungen werden mit dem CIELab-System bestimmt und als ΔE-Werte angegeben. Die Änderungen des Glanzes werden als Restglanzwert angegeben. Dazu wird der Glanz der Beschichtungsoberfläche als Reflektometerwert bestimmt. Der Reflektometerwert einer Probe ist definiert als das Verhältnis der von der Probenoberfläche und einer Glasoberfläche mit der Brechzahl 1,567 in Spiegelrichtung reflektierten Lichtströme. Die Messwerte werden mit Hilfe eines üblichen Reflektometers im Winkel 60° bestimmt. Als Restglanzwert wird die Differenz der Reflektorwerte der Probekörper vor der Bewitterung und nach der Bewitterung angegeben, normiert auf den Reflektorwert vor der Bewitterung.

**Tabelle: Lagerstabilität Beispielrezeptur 1**

| Lagerung | 1 Tag, 23°C | 28 Tage, 40°C | 1 Jahr, 20 - 23 °C |
|---|---|---|---|
| Topfzeit | 3 h | 3 h | 3 h |
| Offenzeit | 16 min | 17 min | 15 min |
| Ende Oberflächenspur | 45 min | 43 min | 47 min |
| Bruchdehnung | 20 mm | 20 mm | 20 mm |
| Farbton-Änderung (ΔE) | 0,28 | 0,26 | 0,30 |
| Restglanzwert | 96 % | 96 % | 97 % |

Wie die Tabelle zeigt, weisen die erfindungsgemäßen Beschichtungsstoffe eine hohe Lagerstabilitität auf. Nach einer längeren Lagerung bei erhöhter Temperatur zeigen die Beschichtungsstoffe selbst keine Verschlechterung ihrer Verarbeitbarkeit. Auch die daraus hergestellten Beschichtungen zeigen keine Beeinträchtigungen ihrer Eigenschaften.

## Patentansprüche

1. Beschichtungsstoff zur Herstellung einer Beschichtung aufweisend zumindest
- 15 bis 70 Gew.-% ein oder mehrere CH-acide Verbindungen A ausgewählt aus Verbindungen der allgemeinen Formel I 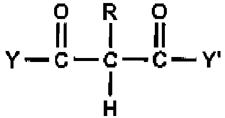 wobei
R Wasserstoff, ein Alkyl- oder Arylrest,
Y ein Alkyl-, Aralkyl-, Aryl-, Alkoxy-Rest oder eine Aminogruppe und,
Y' ein Alkyl-, Aralkyl-, Aryl-, Alkoxy-Rest oder eine Aminogruppe ist,
- 4 bis 40 Gew.-% ein oder mehrere vinyloge Carbonylverbindungen B ausgewählt aus Acrylaten und Maleaten,
- 0,1 bis 15 Gew.-% ein oder mehrere latente Basen als Katalysatoren C,
- 0,00001 bis 10 Gew.-% ein oder mehrere Lichtschutzmittel, welche ausgewählt sind aus der Gruppe enthaltend Radikalfänger, UV-Absorber, Quencher und Peroxidzersetzer,
- 0,00001 bis 20 Gew.-% ein oder mehrere Offenzeit-Verlängerer, welche ausgewählt sind aus der Gruppe enthaltend basische NH-funktionelle Verbindungen mit pKₐ-Werten zwischen 4 und 14,
- 0,00001 bis 20 Gew.-% ein oder mehrere Topfzeit-Verlängerer, welche ausgewählt sind aus der Gruppe enthaltend Alkohole mit bis zu 6 Kohlenstoffatomen und Verdunstungszahlen unter 35,
- 0,00001 bis 70 Gew.-% ein oder mehrere anorganische und/oder organische Pigmente, und
- 0,00001 bis 25 Gew.-% ein oder mehrere Mattierungsmittel, welche ausgewählt sind aus der Gruppe enthaltend mikronisierte amorphe Kieselsäuren, mikronisierte und gefällte Wachse und mikronisierte Polymere,
bezogen jeweils auf die Gesamtmenge des Beschichtungsstoffs.

2. Beschichtungsstoff nach Anspruch 1, **dadurch gekennzeichnet, dass** die Katalysatoren C substituierte Carbonsäuresalze der Formel 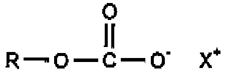 sind, worin
R Wasserstoff, Alkyl- oder Aralkyl- oder ein Polymer-Rest ist,
X⁺ ein Alkali- oder Erdalkalimetall-Kation, ein quaternäres Ammonium- oder Phosphoniumsalz der Formel (R')₄Y⁺ ist,
worin
Y Stickstoff oder Phosphor ist,
R' gleich oder verschieden, Wasserstoff, Alkyl-, Aral- oder Aralkyl- oder ein Polymer ist
und worin R und R' eine Ringstruktur bilden oder ein Polymer sind.

3. Beschichtungsstoff nach einem der voranstehenden Ansprüche, **dadurch gekennzeichnet, dass** die Lichtschutzmittel substituierte 2,2,6,6-Tetramethylpiperidine, 2-Hydroxyphenylbenztriazole, 2-Hydroxybenzophenone, 2-Hydroxyphenyltriazine, Oxalanilide, organische Nickelverbindungen, Thioether und/oder Phosphite sind.

4. Beschichtsstoff nach einem der voranstehenden Ansprüche, **dadurch gekennzeichnet, dass** der Beschichtungsstoff 0,5 bis 5, bevorzugt 1 bis 3 Gew.-% Lichtschutzmittel bezogen auf die Gesamtmasse des Beschichtungsstoffs enthält.

5. Beschichtungsstoff nach einem der voranstehenden Ansprüche, **dadurch gekennzeichnet, dass** die Topfzeit-Verlängerer Alkohole mit bis zu 4 Kohlenstoffatomen sind.

6. Beschichtsstoff nach einem der voranstehenden Ansprüche, **dadurch gekennzeichnet, dass** der Beschichtungsstoff 0,01 bis 15, bevorzugt 0,1 bis 10 Gew.-% Topfzeit-Verlängerer bezogen auf die Gesamtmasse des Beschichtungsstoffs enthält.

7. Beschichtungsstoff nach einem der voranstehenden Ansprüche, **dadurch gekennzeichnet, dass** die Offenzeit-Verlängerer Succinimide, 1,2,4,-Triazole, 1,2,3,-Benzotriazole, 5,5-Diphenylhydantoine, Hydantoine und/oder (RS)-3-Ethyl-3-methylpyrrolidin-2,5-dion sind.

8. Beschichtsstoff nach einem der voranstehenden Ansprüche, **dadurch gekennzeichnet, dass** der Beschichtungsstoff 0,01 bis 10, bevorzugt 0,1 bis 5 Gew.-% Offenzeit-Verlängerer bezogen auf die Gesamtmasse des Beschichtungsstoffs enthält.

9. Beschichtungsstoff nach einem der voranstehenden Ansprüche, **dadurch gekennzeichnet, dass** die Pigmente ausgewählt sind aus der Gruppe enthaltend Titandioxid, Eisenoxide, Chromoxide, Chromtitanate, Bismutvanadat, Cobaltblau, Ruße, Pigment Yellow 151, Pigment Yellow 213, Pigment Yellow 83, Pigment Orange 67, Pigment Orange 62, Pigment Orange 36, Pigment Red 170, Pigment Violet 19, Pigment Violet 23, Pigment Blue 15:3, Pigment Blue 15:6 und Pigment Green 7.

10. Beschichtungstoff nach einem der voranstehenden Ansprüche, **dadurch gekennzeichnet, dass** die Mattierungsmittel Silicagele, Fällungskieselsäuren, Polyethylenwachse, Polypropylenwachse, Polyamidwachse, PTFE-Wachse und/oder Harnstoffaldehydharze.

11. Beschichtsstoff nach einem der voranstehenden Ansprüche, **dadurch gekennzeichnet, dass** der Beschichtungsstoff 1 bis 25, bevorzugt 5 bis 20, besonders bevorzugt 8 bis 15 Gew.-% Mattierungsmittel bezogen auf die Gesamtmasse des Beschichtungsstoffs enthält.

12. Beschichtungsstoff nach einem der voranstehen Ansprüche, **dadurch gekennzeichnet, dass** der Beschichtungsstoff weiterhin bis zu 25 Gew.-% ein oder mehrere Dispergieradditive aufweist.

13. Beschichtungsstoff nach einem der voranstehenden Ansprüche, **dadurch gekennzeichnet, dass** der Beschichtungsstoff weiterhin bis zu 60 Gew.-% ein oder mehrere funktionale Füllstoffe aufweist.

14. Beschichtungsstoff nach einem der voranstehenden Ansprüche, **dadurch gekennzeichnet, dass** der Beschichtungsstoff weiterhin bis zu 50 Gew.-% ein oder mehrere aprotische Lösemittel aufweist.

15. Beschichtungsstoff nach einem der voranstehenden Ansprüche, **dadurch gekennzeichnet, dass** der Beschichtungsstoff weiterhin bis zu 10 Gew.-% ein oder mehrere Verlaufsadditive enthält.

16. Verwendung des Beschichtungsstoffs nach einem der Ansprüche 1 bis 15 zur Herstellung zumindest einer Beschichtung.

17. Verwendung nach Anspruch 16 **dadurch gekennzeichnet, dass** die Beschichtungsstoffe zur Herstellung von Decklacken eingesetzt werden.

18. Verfahren zur Beschichtung eines Bauteils aufweisend die Schritte (a) Applizieren eines Beschichtungsstoffs nach einem der Ansprüche 1 bis 15 auf einem Substrat und (b) Aushärten der applizierten Schicht bei Temperaturen zwischen 5 und 45 °C über einen Zeitraum von 0,5 bis 12 Stunden.

19. Verfahren nach Anspruch 18, **dadurch gekennzeichnet, dass** der Beschichtungsstoff mittels hydraulischen Spritzverfahren, pneumatischen Spritzverfahren, Druckluftspritzverfahren oder mit Hilfe von Rollen appliziert wird.

20. Bauteil beschichtet mit zumindest einer Beschichtung hergestellt aus einem Beschichtungsstoff nach einem der Ansprüche 1 bis 15.

21. Bauteil nach Anspruch 20, **dadurch gekennzeichnet, dass** das Bauteil ein Rotorblatt einer Windkraftanlage ist.

## Claims

1. Coating material for the production of a coating containing at least
- 15 to 70 % by weight of at least one CH-acidic compound A selected from compounds of the formula I 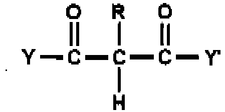 with
R being hydrogen, an alkyl group or aryl group,
Y being an alkyl group, aralkyl group, aryl group, alkoxy group or an amino group, and with
Y' being an alkyl group, aralkyl group, aryl group, alkoxy group or an amino group,
- 4 to 40 % by weight of at least one vinylogous carbonyl compound B selected from acrylates and maleates,
- 0.1 to 15 % by weight of at least one latent base as catalysts C,
- 0.00001 to 10 % by weight of at least one light stabilizer selected from the group comprising free-radical scavengers, UV absorbers, quenching agents and peroxide decomposers,
- 0.00001 to 20 % by weight of at least one open-time extender selected from the group comprising basic NH functional compounds with a pKₐ value of between 4 and 14, and,
- 0.00001 to 20 % by weight of at least one pot-life extender selected from the group comprising alcohols with up to 6 carbon atoms, and showing an evaporation number of below 35,
- 0.00001 to 70 % by weight of at least one inorganic pigment and/or organic pigment, and
- 0.00001 to 25 % by weight of at least one matting agent selected from the group comprising micronized amorphous silicas, micronized and precipitated waxes and micronized polymers,
each based on the total amount of the coating material.

2. Coating material as defined in claim 1, **characterized in that** the catalysts C are substituted carboxylic acid salts of the formula 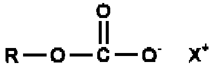 wherein
R is hydrogen, an alkyl group or aralkyl group or a polymer group,
X⁺ is an alkali metal cation or an alkaline earth metal cation, a quaternary ammonium salt or phosphonium salt of the formula (R')4Y+, wherein
Y is nitrogen or phosphorus,
R' is the same or different, is hydrogen, an alkyl group, an aryl group or an aralkyl group or a polymer
and wherein R and R' form a ring structure or are a polymer.

3. Coating material as defined in one of the preceding claims, **characterized in that** the light stabilizers are substituted 2,2,6,6-tetramethylpiperidines, 2-hydroxyphenyl benzotriazoles, 2-hydroxybenzophenones, 2-hydroxyphenyltriazines, oxalanilides, organic nickel compounds, thioethers and/or phosphites.

4. Coating material as defined in one of the preceding claims, **characterized in that** the coating material contains 0.5 to 5 % by weight, preferably 1 to 3 % by weight, of light stabilizers, based on the total mass of the coating material.

5. Coating material as defined in one of the preceding claims, **characterized in that** the pot-life extenders are alcohols with up to 4 carbon atoms.

6. Coating material as defined in one of the preceding claims, **characterized in that** the coating material contains 0.01 to 15 % by weight, preferably 0.1 to 10 % by weight, of pot-life extenders, based on the total mass of the coating material.

7. Coating material as defined in one of the preceding claims, **characterized in that** the open-time extenders are succinimides, 1,2,4,-triazoles, 1,2,3,-benzotriazoles, 5,5-diphenylhydantoins, hydantoins and/or (RS)-3-ethyl-3-methylpyrrolidine-2,5-dione.

8. Coating material as defined in one of the preceding claims, **characterized in that** the coating material contains C.01 to 10 % by weight, preferably 0.1 to 5 % by weight, of open-time extenders, based on the total mass of the coating material.

9. Coating material as defined in one of the preceding claims, **characterized in that** the pigments are selected from the group comprising titanium dioxide, iron oxides, chromium oxides, chromium titanates, bismuth vanadate, cobalt blue, carbon blacks, pigment yellow 151, pigment yellow 213, pigment yellow 83, pigment orange 67, pigment orange 62, pigment orange 36, pigment red 170, pigment violet 19, pigment violet 23, pigment blue 15:3, pigment blue 15:6 and pigment green 7.

10. Coating material as defined in one of the preceding claims, **characterized in that** the matting agents are silica gels, precipitated silicas, polyethylene waxes, polypropylene waxes, polyamide waxes, PTFE waxes and/or urea aldehyde resins.

11. Coating material as defined in one of the preceding claims, **characterized in that** the coating material contains 1 to 25 % by weight, preferably 5 to 20, more preferably 8 to 15 % by weight, of matting agents, based on the total mass of the coating material.

12. Coating material as defined in one of the preceding claims, **characterized in that** the coating material furthermore contains up to 25 % by weight of at least one dispersing additive.

13. Coating material as defined in one of the preceding claims, **characterized in that** the coating material furthermore contains up to 60 % by weight of at least one functional filler.

14. Coating material according to one of the preceding claims, **characterized in that** the coating material furthermore contains up to 50 % by weight of at least one aprotic solvent.

15. Coating material according to one of the preceding claims, **characterized in that** the coating material furthermore contains up to 10 % by weight of at least one levelling additive.

16. Use as defined in any one of claims 1 to 15 for the production of at least one coating.

17. Use as defined in claim 16, **characterized in that** the coating materials are employed for the production of top coats.

18. Method for coating a component, the method comprising the steps (a) applying the coating material as defined in any one of claims 1 to 15 to a substrate and (b) curing the applied layer for a duration of 0.5 to 12 hours at a temperature of between 5 and 45 °C.

19. Method as defined in claim 18, **characterized in that** the coating material is applied by means of hydraulic spraying methods, pneumatic spraying methods, compressed air spraying methods or by means of rollers.

20. Component coated with at least one coating produced from a coating material as defined in any one of claims 1 to 15.

21. Component as defined in claim 20, **characterized in that** the component is a rotor blade of a wind power plant.

## Revendications

1. Matériau de revêtement pour la production d'un revêtement contenant au moins
- 15 à 70 % en poids d'un ou de plusieurs composés acides CH A étant choisis parmi les composés de la formule générale I 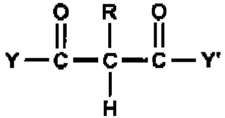 où
R représente l'hydrogène, un radical alkyle ou aryle,
Y représente un radical alkyle, aralkyle, aryle, alkoxy ou un groupe amino et,
Y' représente un radical alkyle, aralkyle, aryle, alkoxy ou un groupe amino,
- 4 à 40 % en poids d'un ou de plusieurs composés carbonyles vinylogues B étant choisis parmi les acrylates et les maléates,
- 0,1 à 15 % en poids d'un ou de plusieurs catalyseurs basiques latents C,
- 0,00001 à 10 % en poids d'un ou de plusieurs stabilisants lumière étant choisis dans le groupe comprenant les capteurs de radicaux libres, les absorbants de la lumière UV, les quenchers et les agents décomposant les peroxydes,
- 0,00001 à 20 % en poids d'un ou de plusieurs agents prolongeant le temps ouvert étant choisis dans le groupe comprenant les composés basiques à fonction NH ayant une valeur de pKₐ entre 4 et 14,
- 0,00001 à 20 % en poids d'un ou de plusieurs agents prolongeant la durée de vie en pot étant choisis dans le groupe comprenant les alcools ayant jusqu'à 6 atomes de carbone et ayant un indice d'évaporation inférieur à 35,
- 0,00001 à 70 % en poids d'un ou de plusieurs pigments inorganiques et/ou pigments organiques, et
- 0,00001 à 25 % en poids d'un ou de plusieurs agents de matage étant choisis dans le groupe comprenant les acides siliciques amorphes micronisés, les cires micronisées et précipitées et les polymères micronisés,
chaque quantité étant exprimée par rapport à la quantité totale du matériau de revêtement.

2. Matériau de revêtement selon la revendication 1, charactérisé en ce que les catalyseurs C sont des sels d'acides carboxyliques substitués de la formule 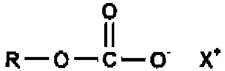 où
R représente l'hydrogène, un radical alkyle ou aralkyle ou un radical polymère,
X⁺ représente un cation de métal alcalin ou un cation de métal alcalino-terreux, un sel d'ammonium quaternaire ou un sel de phosphonium quaternaire de la formule (R')₄Y⁺ ist, où
Y représente l'azote ou le phosphore,
R' est identique ou différent, est l'hydrogène, un radical alkyle, aryle ou aralkyle ou un polymère et où R et R' forment une structure cyclique ou sont un polymère.

3. Matériau de revêtement selon l'une des revendications précédentes, charactérisé en ce que les stabilisants lumière sont des 2,2,6,6-tétraméthylpipéridines substituées, des 2-hydroxyphénylbenztriazoles, des 2-hydroxybenzophénones, des 2-hydroxyphényltriazines, des oxalanilides, des composés de nickel organiques, des thioéthers et/ou des phosphites.

4. Matériau de revêtement selon l'une des revendications précédentes, charactérisé en ce que le matériau de revêtement contient 0,5 à 5 % en poids, de préférence 1 à 3 % en poids, de stabilisants de lumière, chaque quantité étant exprimée par rapport à la quantité totale du matériau de revêtement.

5. Matériau de revêtement selon l'une des revendications précédentes, charactérisé en ce que les agents prolongeant la durée de vie en pot sont des alcools ayant jusqu'à 4 atomes de carbone.

6. Matériau de revêtement selon l'une des revendications précédentes, charactérisé en ce que le matériau de revêtement 0,01 à 15 % en poids, de préférence 0,1 à 10 % en poids, d'agents prolongeant la durée de vie en pot, chaque quantité étant exprimée par rapport à la quantité totale du matériau de revêtement.

7. Matériau de revêtement selon l'une des revendications précédentes, charactérisé en ce que les agents prolongeant le temps ouvert sont des succinimides, des 1,2,4,-triazoles, des 1,2,3,-benzotriazoles, des 5,5-diphénylhydantoines, des hydantoines et/ou une (RS)-3-éthyl-3-méthylpyrrolidine-2,5-dione.

8. Matériau de revêtement selon l'une des revendications précédentes, charactérisé en ce que le matériau de revêtement contient 0,01 à 10 % en poids, de préférence 0,1 à 5 % en poids, d'agents prolongeant le temps ouvert, chaque quantité étant exprimée par rapport à la quantité totale du matériau de revêtement.

9. Matériau de revêtement selon l'une des revendications précédentes, charactérisé en ce que les pigments sont choisis dans le groupe comprenant le dioxyde de titane, les oxydes de fer, les oxydes de chrome, les titanates de chrome, le vanadate de bismuth, le bleu de cobalt, les noirs de carbone, le Pigment Yellow 151, le Pigment Yellow 213, le Pigment Yellow 83, le Pigment Orange 67, le Pigment Orange 62, le Pigment Orange 36, le Pigment Red 170, le Pigment Violet 19, le Pigment Violet 23, le Pigment Blue 15:3, le Pigment Blue 15:6 et le Pigment Green 7.

10. Matériau de revêtement selon l'une des revendications précédentes, charactérisé en ce que les agents de matage sont des gels de silice, des acides siliciques précipités, des cires de polyéthylène, des cires de polypropylène, des cires de polyamide, des cires de PTFE et/ou des résines urée-aldéhyde.

11. Matériau de revêtement selon l'une des revendications précédentes, charactérisé en ce que le matériau de revêtement contient 1 à 25 % en poids, de préférence 5 à 20 % en poids, de préférence particulière 8 à 15 % en poids, d'agents de matage, chaque quantité étant exprimée par rapport à la quantité totale du matériau de revêtement.

12. Matériau de revêtement selon l'une des revendications précédentes, charactérisé en ce que le matériau de revêtement contient en outre jusqu'à 25 % en poids d'un ou de plusieurs additifs de dispersion.

13. Matériau de revêtement selon l'une des revendications précédentes, charactérisé en ce que le matériau de revêtement contient en outre jusqu'à 60 % en poids d'un ou de plusieurs matières de charge fonctionnelles.

14. Matériau de revêtement selon l'une des revendications précédentes, charactérisé en ce que le matériau de revêtement contient en outre jusqu'à 50 % en poids d'un ou de plusieurs solvants aprotiques.

15. Matériau de revêtement selon l'une des revendications précédentes, charactérisé en ce que le matériau de revêtement contient en outre jusqu'à 10 % en poids d'un ou de plusieurs additifs nivelants.

16. Utilisation du matériau de revêtement selon l'une quelconque des revendications 1 à 15 pour la production d'au moins un revêtement.

17. Utilisation selon la revendication 16, charactérisée en ce que les matériaux de revêtement sont utilisés pour la production de vernis de finition.

18. Prodédé pour le revêtement d'un composant comprenant les étapes suivantes: (a) application d'un matériau de revêtement selon l'une quelconque des revendications 1 à 15 sur un substrat et (b) durcissement de la couche appliquée à une température comprise entre 5 et 45 °C pour une durée de 0,5 à 12 heures.

19. Procédé selon la revendication 18, charactérisé en ce que le matériau de revêtement est appliqué par procède de pulvérisation hydraulique, procédé de pulvérisation pneumatique, procédé de pulvérisation à air comprimé ou bien à l'aide de rouleaux.

20. Composant revetû d'au moins un revêtement produit d'un matériau de revêtement selon l'une quelconque des revendications 1 à 15.

21. Composant selon la revendication 20, charactérisé en ce que le composant est une pale de rotor d'une éolienne.
